# EUROPEAN PATENT APPLICATION

(11) **EP 3 608 932 A1**
(43) Date of publication of application: **12.02.2020**
(21) Application number: 19190577.7
(22) Date of filing: 07.08.2019
(51) Int. Cl.: H01G 4/224, H05K 1/02, H05K 5/06

(54) **HOUSING FOR AN ELECTRONIC COMPONENT WITH AN INNER RECEPTACLE AND AN OUTER CASING**

(30) Priority: 07.08.2018 DE 102018119216
(71) Applicant: TDK Electronics AG, 81671 München (DE)
(72) Inventor: Li, Xiaolong, Zhuhai City, Guangdong 519000 (CN); Qiu, Royal, Zhuhai City, Guangdong 519000 (CN); Zhang, Daniel, Zhuhai City, Guangdong 519000 (CN)
(74) Representative: Epping - Hermann - Fischer

(57) **Abstract**

A housing for an electronic component (6) with an outer casing (1) and an inner receptacle (2) inside the outer casing (1) is provided. Between the outer casing (1) and the inner receptacle (2) a cavity (3) is constituted which is closed. The inner receptacle (2) is laid out to include the electronic component (6) and to locate it tightly in position.

## Description

The present invention relates to a housing for an electronic component, comprising an external casing and an internal receptacle inside the external casing.

Electronic components often generate an electromagnetically-induced acoustic noise. This noise can be in the frequency range from 20 Hz to 20 kHz, which is an audible sound for the human being. Electromagnetic forces induce vibrations in constituent parts of the electronic component which produces the noise. A well-known example for this phenomena is the hum of a transformer or of a fluorescent lamp.

In ceramic capacitors, for example, a dielectric changes its shape due to its electrostriction and an applied electric field. If the device is employed in an AC application the shape varies depending on the AC frequency. This oscillation can produce an undesirable audible sound. In the Japanese patent application JP 2013-65820 A an attempt to reduce the produced noise is disclosed. A mounting structure combined with lead wires to the ceramic capacitor on a circuit board is shown, whereby the mounting structure decouples the movement of the ceramic capacitor from the circuit board to lessen the noise.

Coil whining, predominantly occurring in graphic cards but also in other applications, is another well-known example. The windings of the coil are exposed to a magnetic field which depends on the current change and the geometry of the coil. The vibrations of the windings caused by the magnetic force produce the infamous coil whining.

Film capacitors also suffer from electromagnetically-induced acoustic noise, especially when they are used in a high frequency AC application. When the often metalized films are charged the Coulomb force acts on them. In an AC application the time varying Coulomb force induces a mechanical vibration of the film resulting in an undesired noise.

Irrespective of the used electronic component, electromagnetically-induced acoustic noise is a challenge to all electronic applications which are sensitive to noise. Especially, in electronic devices intended for consumer applications as PCs, laptops or TVs it is desirable to avoid noise.

Therefore the object of this invention is to provide a housing for electronic components which is able to reduce the electromagnetically-induced acoustic noise.

This object is solved by the features of the independent claim.

There is provided a housing for an electronic component with an outer casing and an inner receptacle inside the outer casing. Between the outer casing and the inner receptacle a cavity is constituted which is closed. The inner receptacle is laid out to include the electronic component and to locate it tightly in position. The outer casing might be exposed to a potentially damaging and close-fitting environment, as a small circuit board, and has to be planned according to the requirements, as the available space in the application or the needed acoustic attenuation. The inner receptacle and the outer casing may be joined together to form a double-walled housing, wherein the closed cavity is created. By closing the cavity the noise dampening is increased compared to an open construction, because the acoustic wave cannot exit the housing undamped. Additionally, due to being closed, the cavity can be filled with an expedient material.

The cavity between the outer casing and the inner receptacle may be configured to provide acoustic quieting by damping the acoustic noise generated inside the inner receptacle to reduce the noise leaking out of the housing in more than one direction. The noise dampening raising from the cavity can be regulated in each direction independently by adjusting a width of the cavity between the particular surfaces of the inner receptacle and the outer casing. By expanding the width of the cavity the noise dampening of the housing can be increased. In a film capacitor, for example, which is built by rolling up a metallized film to form a cylinder, most of the electromagnetically-induced acoustic noise exits the cylinder at an area of a bottom base and an area of a top base, but less at a curved surface area. If this film capacitor is employed as the electronic component in the housing of the present invention, it might be beneficial to increase the width of the cavity in an axial direction of the cylinder facing the bottom and top base, as most of the sound waves exit in this both directions. Nevertheless, a not negligible portion of the noise exits the cylindrical film capacitor at the curved surface area. This portion of the noise is attenuated by the cavity in the radial direction of the cylindrical film capacitor.

In one embodiment the outer casing and the inner receptacle can comprise the same material or be made out of the same material. Thermomechanical stress within the housing, whether due to a heated electrical component inside the housing or to a hot environment, can be avoided by employing the same material for the inner receptacle and the outer casing. The outer casing and the inner receptacle could be manufactured from a metal, for example, steels as carbon steel, stainless steel, alloy steel or tool steel. Other appropriate materials can be synthetic polymers such as PET, PPS, PBT, TPEs, HDPEs, PPs, PVCs or PTFEs. In case that the components are in danger of corrosion or degradation the material may be protected with a coating, a plating or another suitable treatment.

In another embodiment it can be advantageous to use different materials for the outer casing and the inner receptacle. A particular material for the inner receptacle can, for example, be beneficial for the noise dampening. A conducive material for integrating the housing into an application can be used for the outer casing. Materials to build the outer casing or inner receptacle can be a metal, for example, also steels as carbon steel, stainless steel, alloy steel or tool steel. Other appropriate materials may be synthetic polymers such as PET, PPS, PBT, TPEs, HDPEs, PPs, PVCs or PTFEs. In case that the component is in danger of corrosion or degradation the material may be protected with a coating, a plating or another suitable treatment.

The outer casing also may comprise a flame retardant or flame resistant material. In high temperature applications or if a potentially explosive electronic component, as an electrolytic capacitor, is disposed in the housing, it might be safety-related required to use a flame retardant or flame resistant material for the outer casing. Flame retardant or flame resistant materials to build the outer casing or inner receptacle can be a metal, for example, also steels as carbon steel, stainless steel, alloy steel or tool steel. Other appropriate materials may be synthetic polymers such as CR, PC, PEI, or PES.

The outer casing and the inner receptacle can be cuboid in shape with one open side each. In this convenient embodiment the cavity is formed between four sidewalls of the outer casing and the four sidewalls of the inner receptacle and between a bottom of the outer casing and a bottom of the inner receptacle. In this way, the noise is damped by the cavity in five of six possible directions and one still has access to the electronic component disposed in the receptacle.

The housing may be constructed in a way where the inner receptacle comprises at least a first side wall and a second side wall and the outer casing comprises at least a first side wall and a second side wall, wherein the first side wall of the inner receptacle is adjacent to and parallel to the first side wall of the outer casing and the second side wall of the inner receptacle is adjacent to and parallel to the second side wall of the outer casing, while the distance from the first side wall of the inner receptacle to the first side wall of the outer casing is different from the distance from the second side wall of the inner receptacle to the second side wall of the outer casing.In this way the housing can be adapted to an electronic component which is positioned into the inner receptacle. If an electronic component preferably leaks electromagnetically-induced acoustic noise into a particular direction, the damping factor can be increased in this direction by expanding the width of the cavity in this direction.

Spacers arranged on an inner side of the outer casing or on an outer side of the inner receptacle can be applied to define the width of the cavity. The damping factor of the housing can be adjusted by modifying a height of the spacer and thereby the width of the cavity. By increasing the height of the spacers and thereby expanding the width of the cavity the noise dampening of the housing can be increased. Besides it can be practical to employ the spacers for assembling the housing.

A flange can be a suitable element to close the cavity. The flange can be a protrusion attached to the edge of the opening of either the inner receptacle or the outer casing stretching over the cavity and closing it.

Additionally, an adhesive can be used on the flange or without the flange to close and seal the cavity between the outer casing and the inner receptacle. By sealing the cavity gas-tight the noise dampening can be increased and volatile substances or a vacuum can be maintained inside the cavity.

A way to improve the damping factor of the housing is to provide a vacuum or underpressure inside the cavity. In this way the propagation of the acoustic waves is inhibited. Alternatively, the cavity also can be filled with ambient air at standard pressure.

Acoustic foam can also be disposed in the cavity to attenuate the sound waves. Acoustic foams often comprise lightweight materials as polyether, polyester or polyurethane and have been proven to be a good acoustic insulator, in particular for mid and high frequencies.

By incorporating an electronic component into the housing the composition becomes a quiet alternative to the original electronic component. The advantage of the proposed solution is that it can improve the noise level of an electronic component without having to alter the electronic component or the production line. Furthermore, with the proposed housing already existing electronic components can be upgraded retroactively.

As mentioned above, capacitors, eminently film and electrolytic capacitors, are afflicted by electromagnetically-induced acoustic noise. For this reason the housing of the present invention is particularly suitable for them.

The electronic component disposed into the inner receptacle can be conveniently covered and fixated by a sealing resin. The sealing resin acts as further acoustic attenuator reducing the leaking noise and prevents degradation of the electronic component by humidity or oxidation. Potential materials for the resin are for example epoxy, silicon or alkyd.

When a sealing resin is applied to arrest the electronic component at least one electrode of the electronic component may be arranged in such a way that it protrudes from the sealing resin. This ensures that the electronic device can be connected.

In the following the invention is described based on embodiments under reference to the figures. Same parts or parts with equivalent effect are referred by same reference numbers.

The figures show:
Figure 1 exhibits an exploded-view of a housing for an electronic component;
Figure 2 exhibits a perspective view of an assembled housing for an electronic component;
Figure 3 exhibits a cross section of the front view of an inner receptacle for a housing for an electronic component;
Figure 4 exhibits a cross section of a side view of the inner receptacle for a housing for an electronic component;
Figure 5 exhibits a top view of the inner receptacle for a housing for an electronic component;
Figure 6 exhibits a cross section of an front view of an outer casing for a housing for an electronic component;
Figure 7 exhibits a cross section of a side view of the outer casing for a housing for an electronic component;
Figure 8 exhibits a top view of the outer casing for a housing for an electronic component;
Figure 9 exhibits a schematic cross section of a side view of an electronic device comprising the housing for an electronic component and an electronic component;

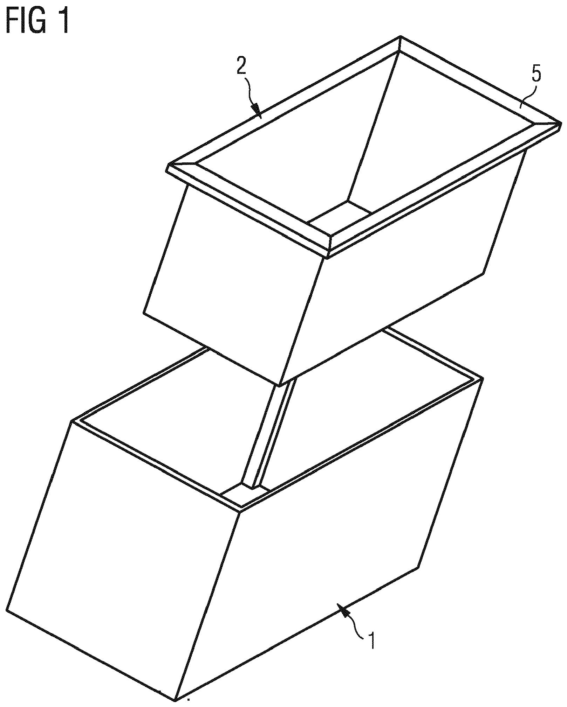

Fig. 1 shows an exploded-view drawing of a housing for an electronic component. The housing consists of an outer casing 1 and an inner receptacle 2. The inner receptacle 2 is dimensioned for fitting into the outer casing 1.

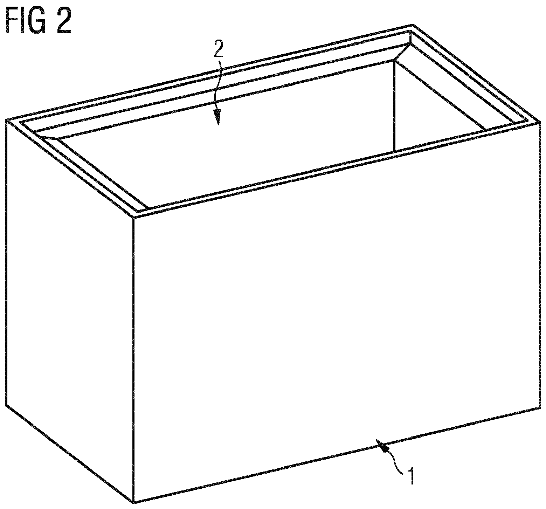

In Fig. 2 the inner receptacle 2 is positioned inside of the outer casing 1. The dimension of a flange 5 attached to an outer side of the inner receptacle 2 matches an internal area of the outer casing 1. In between the outer casing 1 and the inner receptacle 2 a cavity 3 is formed and closed by the flange 5.

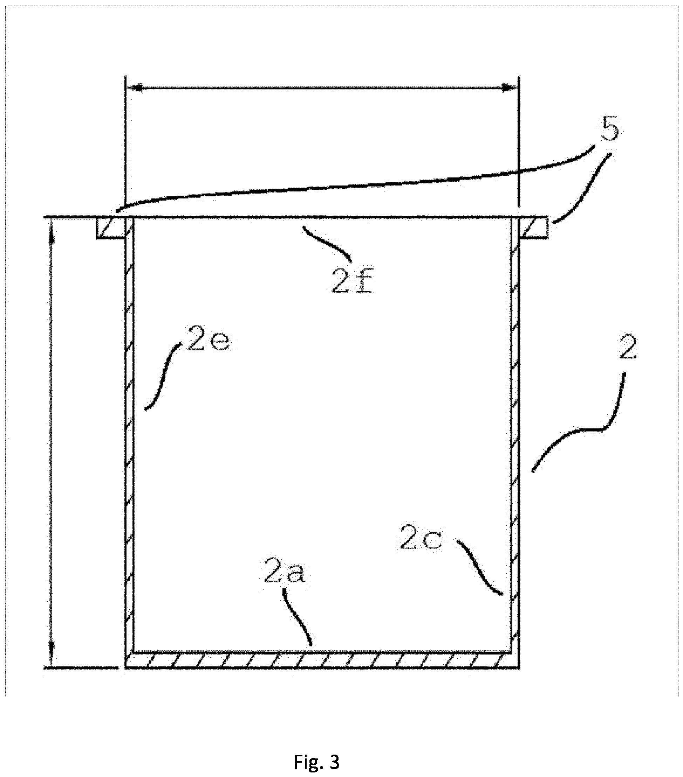

Figure 3 shows a cross section of a front view of the inner receptacle 2 of the housing for an electronic component 6. The inner receptacle 2 forms a box having a bottom 2a and four side walls 2b, 2c, 2d, 2e. The inner receptacle 2 forms a chamber in which the electronic component 6 can be placed. The chamber is boarded by the bottom wall 2a and the side walls 2b, 2c, 2d, 2e. The bottom 2a and the side walls 2b, 2c, 2d, 2e are perpendicular to adjacent side walls and form a rectangular chamber. The side wall 2b, 2d are arranged parallel to each other and the side walls 2c, 2e are arranged parallel to each other. At an upper side, opposite to the bottom 2a there is an opening 2f instead of a cover wall. The inner receptacle 2 has a cuboid shape in the present embodiment but can have any other shapes in other embodiments. Its extents are chosen to be larger than the extents of the electronic component 6. Thereby the electronic component 6 can easily be disposed in it. It may have further retaining means inside to fix the electronic component 6.

At an edge of the opening 2f the flange 5 is integrally formed with the adjacent side wall and protrudes from the edge away from the opening 2f. The flange 5 closes the cavity 3 which is formed between the inner receptacle 2 and the outer casing 1 when the inner rreceptacle 2 and the outer casing 1 are fixed to each other. Additionally, an adhesive can be used on the flange 5 or without the flange 5 to close and seal the cavity 3 between the outer casing 1 and the inner receptacle 2. In other embodiments the flange 5 might be attached to the outer casing 1 and protrude to the inside of the outer casing 1. The bottom 2a of the inner receptacle 2 is thicker than the side walls 2c, 2e for stability reason, but may have the same thickness in another embodiment. In some applications, especially if a fluid as a sealing resin 7 or an insulating oil shall be deposited in the inner receptacle 2, it is desirable to use an impermeable material for the inner receptacle 2.

The inner receptacle 2 could be manufactured from a metal, for example, steels as carbon steel, stainless steel, alloy steel or tool steel. Other appropriate materials can be synthetic polymers such as PET, PPS, PBT, TPEs, HDPEs, PPs, PVCs or PTFEs. In case that the component is in danger of corrosion or degradation the material may be protected with a coating, a plating or another suitable treatment. Injection molding could to be a suitable manufacturing process for the production of the inner receptacle 2, but other processes might work as well.

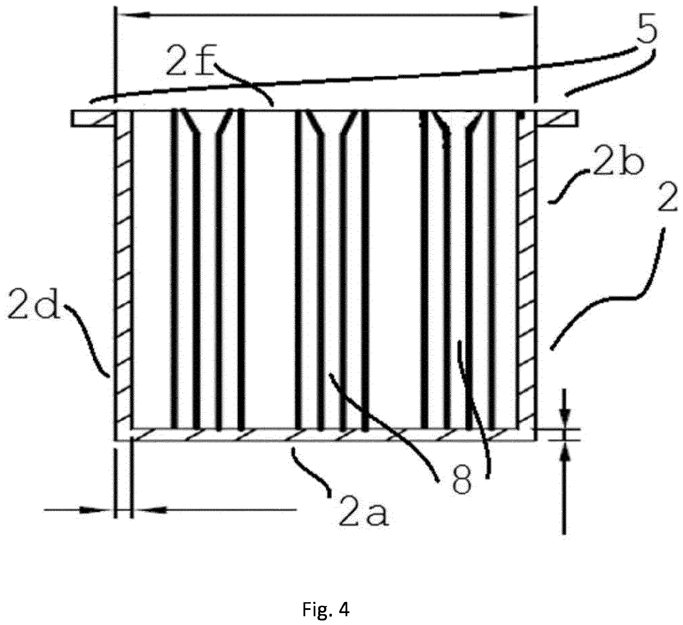

In Fig. 4 a cross section of the side view of the inner receptacle 2 of the housing for the electronic component 6 is shown. Additionally to the features shown in Fig. 1 here three guidance rails 8 at the sidewall 2c of the inner receptacle 2 can be seen. In applications where the sealing resin 7 is used to fix an electronic component 6 in the inner receptacle 2 it can be helpful to lock electrodes attached to the electronic component 6 in place with the help of the guidance rails 8 to ensure that they protrude from the sealing resin 7 after filling and hardening of the sealing resin 7 in the inner receptacle 2.

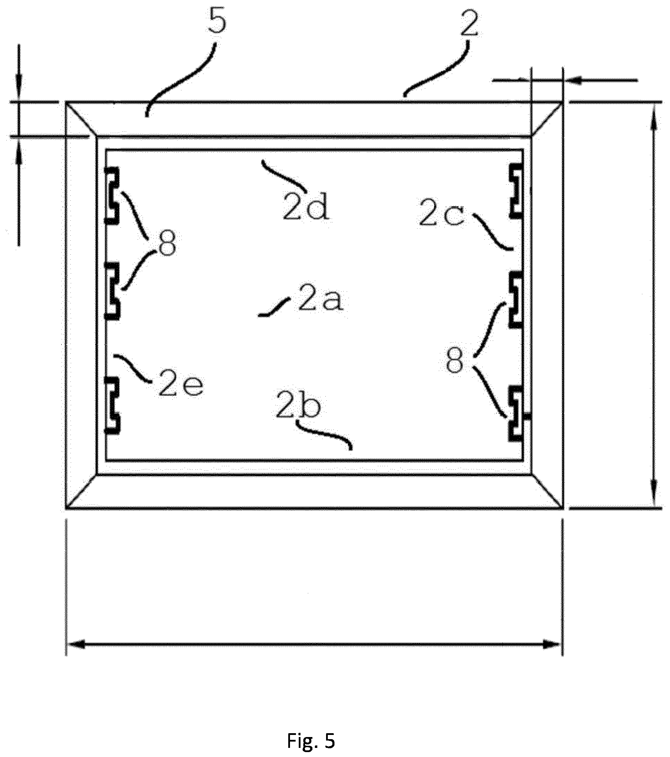

Fig. 5 shows a top view of the inner receptacle 2 for the housing for an electronic component 6. The flange 5 encircles the whole opening 2f. The guidance rails 8 for electrodes shown in Fig. 4 are on two side walls 2c, 2e. In most cylindrical film capacitors, where a big portion of the electromagnetically-induced acoustic noise exits the cylinder at the area of the bottom base and the area of the top base, the electrodes stick out at the bottom and top base. Therefore, this film capacitor would be arranged here in a way where the bottom and top base are facing the side walls 2c, 2e, where the guidance rails 8 are located, and the curved surface would be parallel to the side walls 2b, 2d. Therefore, in this embodiment, the flange 5 on the sidewalls 2c, 2e are broader than the flange 5 on the sidewalls 2b, 2d. As the flange 5 is laid out to fit in the outer casing 1 the cavity 3 has a broader extent next to the side wall 2c, 2e ,where the guidance rails 8 are located, compared to the side wall 2d, 2b. In conclusion the damping factor in a direction perpendicular to the side walls 2c, 2e would be greater than the damping factor in a direction perpendicular to the side walls 2b, 2d.

In other embodiments the flange 5, and thereby the cavity 3, may have the same extensions und the same damping factor in all directions. In a further embodiment the flange 5, and thereby the cavity 3, can have different extents in every direction to customize the directional noise dampening.

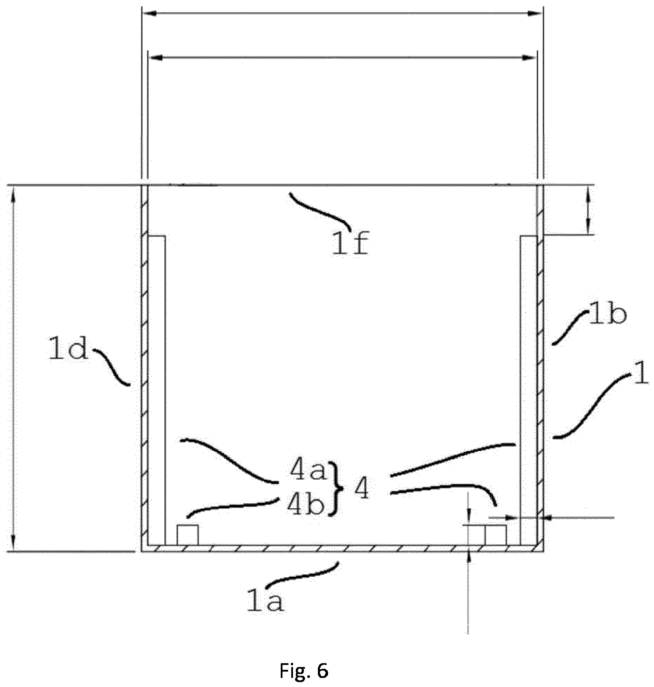

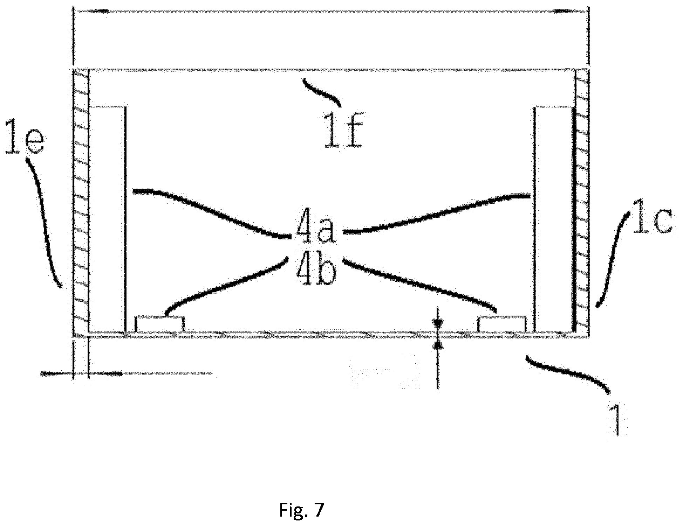

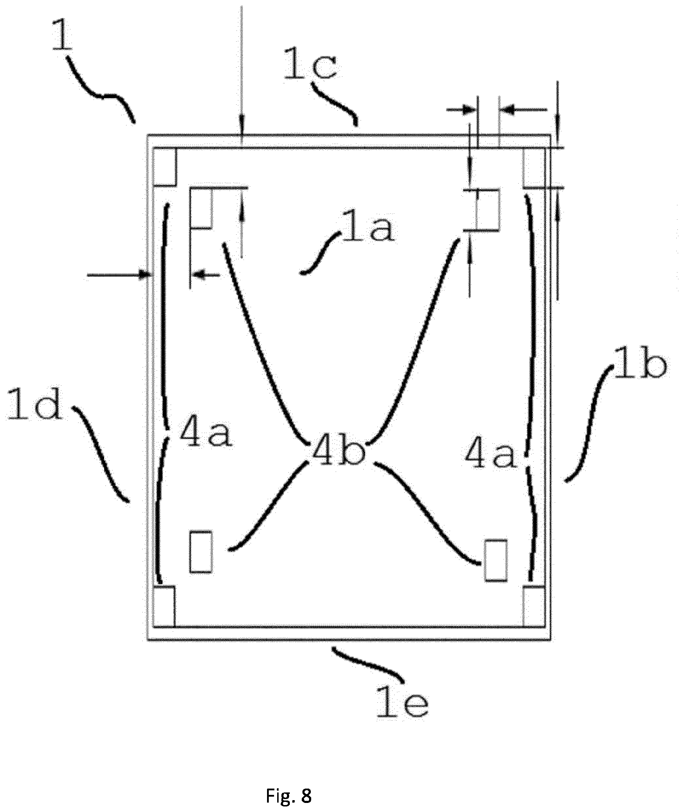

So far the inner receptacle 2 has been described in detail. Hereinafter, the outer casing 1, which constitutes the housing joined together with the inner receptacle 2 will be described in more detail with reference to Fig. 6 to Fig. 8. Fig. 6 and Fig. 7 exhibits a cross section of the front and the side view of the outer casing 1. In Fig. 8 a top view of the outer casing 1 is shown.

The outer casing 1 forms a box having a bottom 1a and four side walls 1b, 1c, 1d, 1e. The outer casing 1 forms a chamber in which the inner casing 2 can be inserted. The chamber is boarded by the bottom 1a and the side walls 1b, 1c, 1d, 1e. The bottom 1a and the side walls 1b, 1c, 1d, 1e are perpendicular to adjacent side walls and form a rectangular chamber. At an upper side, opposite to the bottom 1a there is an opening If instead of a cover wall.
The outer casing 1 has a cuboid shape in the present embodiment but can have any other shapes in other embodiments. Its extents are chosen such that the chamber has the same measurements as the external measurements of the flange 5 of the inner receptacle 2. Thereby the inner receptacle 2 with the attached flange 5 is accurately fitting into the outer casing 1. Between the corresponding bottoms 1a, 2a, and the corresponding side walls 1b, 2b, 1c, 2c, 1d, 2d, 1e, 2e of the outer casing 1 and the inner receptacle 2 the cavity 3 is formed and closed by the flange 5 between the opening If and the opening 2f.

In Fig. 6 and Fig. 7 four spacers 4 provided inside the outer casing 1 can be seen. In total, the outer casing 1 comprises eight spacers 4. In the following the width of the spacers 4 is defined as the extent perpendicular to a side wall of the outer casing 1 and the height of the spacers 4 as the extent perpendicular to the bottom 1a. Two long spacers 4a are positioned inside the outer casing 1 right next to side walls. The width of this long spacers 4a may have at most the width of the cavity 3. Else the inner receptacle 2 would not fit in the outer casing 1. In some distance away from the side walls 1b, 1d two short spacers 4b are arranged symmetrically. The height of the short spacer 4b define the width of the cavity 3 between the bottom 1a of the outer casing 1 and the bottom of the inner receptacle 2. By increasing the height of the short spacers 4b, and thereby the width of the cavity 3, the dampening downwards through the bottom 1a is enhanced. The difference in height between the long spacers 4a and short spacer 4b matches the distance from the lower side of the bottom 2a to the lower side of flange 5 of the inner receptacle 2. Hence, when the inner receptacle 2 is inserted into the outer casing 1, the bottom 2a of the inner receptacle 2 rests on the short spacers 4b and the flange 5 rests on the long spacers 4a.

In Fig. 8 a top view of the outer casing 1 is shown. All of the eight spacers 4 can be seen and are arranged on top of the bottom 1a inside the outer casing 1. Four of the spacers 4 are long spacers 4a, which are located right in the four corners adjacent to two side walls. In this present embodiment, the base of this long spacers 4a is not quadratic but oblong. The elongated extent of the base of the long spacers 4a spaces the broader two sides of cavity 3, between the sidewalls 1c and 2c as well as between 1e and 2e. The shorter extent of the base of the long spacers 4a spaces the narrower two sides of the cavity 3, between the sidewalls 1b and 2b as well as between 1d and 2d. The other four spacers 4, which are short spacers 4b, are arranged evenly in the central part of the bottom 1a area to provide a secure and even platform for the inner receptacle 2.

The outer casing 1 can be manufactured from the same or a different material as the inner receptacle 2. Appropriate materials can be synthetic polymers such as PET, PPS, PBT, TPEs, HDPEs, PPs, PVCs or PTFEs. In high temperature applications or if a potentially explosive electronic component 6, as an electrolytic capacitor, is disposed in the housing, it might be safety-related required to use a flame retardant or flame resistant material for the outer casing 1. Flame retardant or flame resistant materials to build the outer casing 1 or inner receptacle 2 can be a metal, for example, also steels as carbon steel, stainless steel, alloy steel or tool steel. Other appropriate materials may be flame retardant synthetic polymers such as CR, PC, PEI, or PES. In case that the component is in danger of corrosion or degradation the material may be protected with a coating, a plating or another suitable treatment. Injection molding could to be a suitable manufacturing process for the production of the outer casing 1, but other processes might work as well.

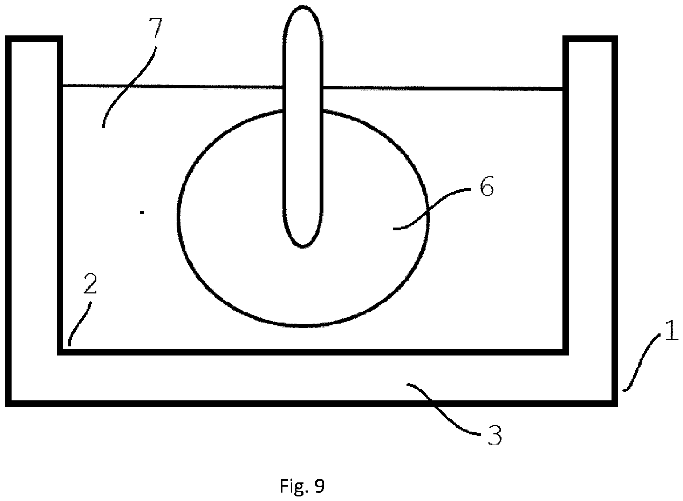

In Fig. 9 a schematic side view of an electronic device comprising the housing for an electronic component 6 and an electronic component 6 is shown. The outer casing 1 and the inner receptacle 2 are assembled and joined. In between the outer casing 1 and the inner receptacle 2 the cavity 3 has been formed. Inside the inner receptacle 2 an electronic component 6, for example a capacitor, is positioned and fixed by the sealing resin 7. An electrode of the electronic component 6 protrudes from the sealing resin 7 to allow an electrical connection to the electronic component 6.

### Reference list

- 1: Outer casing
- 1a: Bottom of outer casing
- 1a-e: Side walls of outer casing
- If: Opening of outer casing
- 2: Inner receptacle
- 2a: Bottom of inner receptacle
- 2b-e: Side walls of inner receptacle
- 2f: Opening of inner receptacle
- 3: Cavity
- 4: Spacers
- 4a: Long spacers
- 4b: Short spacers
- 5: Flange
- 6: Electronic component
- 7: Sealing resin
- 8: Guidance rails

## Claims

1. A housing for an electronic component, comprising:
- an outer casing (1), which comprises a flame retardant material or a flame resistant material;
- an inner receptacle (2) inside the outer casing (1), constituting a cavity (3) between the outer casing (1) and the inner receptacle (2), wherein the cavity (3) between the outer casing (1) and inner receptacle (2) is closed.

2. A housing according to the claim above, wherein the cavity between the outer casing (1) and the inner receptacle (2) is configured to provide acoustic quieting by damping acoustic noise generated inside the inner receptacle (2) in more than one direction.

3. A housing according to one of the claims above,
wherein the outer casing (1) and the inner receptacle (2) comprise the same material, or
wherein the outer casing (1) and the inner receptacle (2) comprise different materials.

4. A housing according to one of the claims above,
wherein the outer casing (1) and the inner receptacle (2) are cuboid in shape and open at one side, wherein the cavity (3) is formed between four sidewalls (1b-e) of the outer casing (1) and four sidewalls (2b-e) of the inner receptacle (2) and between a bottom (1a) of the outer casing (1) and a bottom (2a) of the inner receptacle (2).

5. A housing according to one of the claims above,
wherein the inner receptacle (2) comprises at least a first side wall (2c, 2e) and a second side wall (2b, 2d),
wherein the outer casing (1) comprises at least a first side wall (1c, 1e) and a second side wall (1b, 1d),
wherein the first side wall (2c, 2e) of the inner receptacle (2) is adjacent to and parallel to the first side wall (1c, 1e) of the outer casing (1),
wherein the second side wall (2b, 2d) of the inner receptacle (2) is adjacent to and parallel to the second side wall (1b, 1d) of the outer casing (1),
wherein the distance from the first side wall (2c, 2e) of the inner receptacle (2) to the first side wall (1c, 1e) of the outer casing (2) is identical to or different from the distance from the second side wall (2b, 2d) of the inner receptacle (2) to the second side wall (1b, 1d) of the outer casing (1).

6. A housing according to one of the claims above,
wherein the outer casing (1) comprises at least one spacer (3) on an inner side and/or wherein the inner receptacle (2) comprises at least one spacer (4) on an outer side.

7. A housing according one of the claims above,
wherein the cavity (3) is closed by a flange (5).

8. A housing according to one of the claims 1 to 7,
wherein the outer casing (1) and the inner receptacle (2) are joint by an adhesive.

9. A housing according to one of the claims above,
wherein there is a vacuum, or underpressure, or air, or acoustic foam, or other damping acoustic noise material, inside the cavity (3) between the outer casing (1) and the inner receptacle (2).

10. An electronic device comprising a housing according to one of the claims above and an electronic component, wherein the electronic component (6) is arranged inside of the inner receptacle (2).

11. An electronic device according to claim 10,
wherein the electronic component (6) is a capacitor.

12. An electronic device according to claim 10 or claim 11,
wherein the electronic component (6) inside of the inner receptacle (2) is covered with sealing resin (6).

13. An electronic device according to the claim above, wherein at least one electrode connected to the electronic component (6) protrudes from the sealing resin (7).
